(19) Europäisches Patentamt / European Patent Office / Office européen des brevets

(11) **EP 4 764 151 A1**

(12) **EUROPEAN PATENT APPLICATION**

(43) Date of publication:
**24.06.2026 Bulletin 2026/26**

(21) Application number: **24307198.2**

(22) Date of filing: **19.12.2024**

(51) International Patent Classification (IPC):
**E21B 43/00** (2006.01)    **E21B 41/00** (2006.01)
**E21B 43/12** (2006.01)

(52) Cooperative Patent Classification (CPC):
**E21B 43/12; E21B 41/00; E21B 43/00;**
E21B 2200/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech
92400 Courbevoie (FR)**

(72) Inventor: **BERGEY, Pierre
64000 PAU (FR)**

(74) Representative: **Plasseraud IP
104 Rue de Richelieu
CS92104
75080 Paris Cedex 02 (FR)**

(54) **OPTIMIZED CONTROL OF FLOW ENTITIES OF HYDROCARBON RESERVOIR**

(57)    The present disclosure relates to a computer-implemented method for determining an optimized control of flow entities of a hydrocarbon reservoir, the method comprises:

a/ obtaining a meshed representation of flow entities, each flow entity is described by a flow entity node and each link between the flow entities is described a flow entity edge;

the flow entity nodes being ordered using ranks according to at least one flow entity property and the flow entity edges being ordered using ranks according to at least one flow entity relationship property;

b/ determining at any simulated time an order of the flow entity nodes using ranks according to at least one combined node-edge property derived from a flow entity property and a flow entity relationship property;

c/ applying at least one variation parameter to the properties;

d/ determining the optimized control of the flow entities from at least an order of the flow entities determined using an optimization of a cost function, the at least one variation parameter being an optimization variable.

FIG. 2

## Description

### Technical Field

This disclosure pertains to the field of simulation reservoir. More particularly, the present disclosure relates to a method and a computing device for determining an optimized control of flow entities of a hydrocarbon reservoir.

### Background Art

There are existing methods to optimize the management or control of flow entities such as completions, wells, or groups of wells, taking into account the constraints associated with these objects. These constraints can relate to a wide range of operating conditions, such as flow rates, pressure, temperature, and compositions, and can be specific to a fluid phase and time-dependent.

For example, these methods may allow to determine an order or priorities across flow entities. For instance, an order of wells can correspond to the order of well openings, the order of well drilling, the order for adding flow assistance equipment (pumps, gas lift mandrels) to flow entities, etc.

Well priorities can control the way flow for a considered flow quantity, constrained for a group of flow entities, is distributed across the entities constituting such group. Such repartition can relate to many different flow quantities pertaining to the flow direction (production or injection), the nature the constraint (water, oil, gas, compositional component flow, pressure or pressure differential, etc.), the role that the fluid flow play in the industrial process (fluid that is a product, a waste, an ancillary flow, etc.).

Group level constraints may include: rate constraint pertaining to a given fluid stream (e.g., oil rate below value X), pressure or temperature constraint pertaining to a given point in flow system (bottom hole pressure higher or equal to value Y), etc.

Pre-existing methods for determining an order may rely upon sorting flow entities based upon a property solely dependent of the properties of the considered flow entity. The dependency might involve a mathematical combination of time dependent properties of the considered flow entity.

Pre-existing method for determining priorities may include at least the following:

a) Direct input of numerical priority property values per entity. The priority of a flow entity is computed by normalization of the entity priority value normalized by the sum of priority properties values for the considered flow entities.

b) Computation of priority properties by mathematical combination of entity properties in which the priority property of an entity is dependent solely of properties of the entity considered. Resulting priorities are normalized as per approach a).

c) Computation of priority properties along a Waterflood optimization aiming at equalizing water sweep over the reservoir acreage approach as detailed in the document "Using Streamline-Derived Injection Efficiencies for Improved Waterflood Management", paper SPE 84080, Society of Petroleum Engineers Journal (2006), 9, No. 2."

d) Computation of priority properties using a Proportional Integral Derivative approach to aim at equalizing pressure in various parts of the reservoir as per the following documents:

-     Güyagüler, B. and Byer, T., "A New Rate-Allocation-Optimization Framework," paper SPE 105200, SPE Production & Operations (2008), 23, No. 4, 448-457; *also presented at the SPE Reservoir Simulation Symposium, Houston, Texas, USA (February 16-28, 2007).*

-     Güyagüler, B., Zapata, V. J., Cao, H., Stamati, H. F. and Holmes, J. A.: "Near-Well Subdomain Simulations for Accurate Inflow Performance Relationship Calculation to Improve Stability of Reservoir-Network Coupling," paper SPE 141207, SPE Reservoir Evaluation & Engineering (2011), 14, No. 5, 634-643; *also presented at SPE Reservoir Simulation Symposium, The Woodlands, Texas, USA (February 21-23, 2011).*

However, these methods are complex to implement, are hardware and time-consuming, and may miss one or more optimal configurations or, most importantly delay the identification of comparatively performing or optimal control when included in automated optimization processes. Most advanced ones, such as Waterflood optimization and/or Proportional Integral Derivative, aims at (and quite successfully enable) implementing heuristics which are not always optimal from an economic viewpoint. Thus, there is no guarantee that the proposed solution is optimal.

The present method improves the situation, by widening the range of heuristics that can be used to construct a tentatively optimal ordering of and or attribution of priorities to flow entities and enabling balancing between such heuristics. **Summary**

It is a proposed a computer-implemented method for determining an optimized control of flow entities of a hydrocarbon reservoir, the method may comprise:

a/ obtaining a meshed representation of flow entities, said representation comprising nodes and edges connecting the nodes, each flow entity being described by a node called flow entity node and each link between the flow entities being described by an edge called flow entity edge, the flow entity nodes being described by at least one property called flow entity property and the flow entity edges being described by at least one property called flow entity relationship property,

the flow entity nodes being ordered according to said at least one flow entity property such that each flow entity node has a respective rank according to said at least one flow entity property,

and the flow entity edges being ordered according to said at least one flow entity relationship property such that each flow entity edge has a respective rank according to said at least one flow entity relationship property,

b/ determining at any simulated time an order of the flow entity nodes according to at least one property called combined node-edge property, said combined node-edge property being derived from a flow entity property among said at least one flow entity property and a flow entity relationship property among said at least one flow entity relationship property, each rank of a flow entity node according to said at least one combined node-edge property being determined from:

- the respective ranks according to a flow entity property among said at least one flow entity property of the flow entity nodes directly connected to the flow entity node; and

- the respective ranks according to a flow entity relationship property among said at least one flow entity relationship property of the flow entity edges directly connected to the flow entity node;

c/ applying at least one variation parameter to at least one among the at least one flow entity property and the at least one combined node-edge property;

d/ determining the optimized control of the flow entities from at least an order of the flow entities determined using an optimization of a cost function, the at least one variation parameter being an optimization variable, said optimization comprising iterations of:

d1/ determining a plurality of global ranks for the flow entity nodes, each global rank of a flow entity node being determined from the respective rank of the flow entity node for said at least one flow entity property and from the respective rank of the flow entity node for said at least one combined node-edge property;

d2/ determining an order of the flow entities based on said global ranks,

d3/ evaluating the cost function based on the determined order of the flow entities.

Thus, advantageously, an optimized control of the flow entities may be simply determined by transforming the input data into ranks, corresponding to an order of the flow entities. In the context of the present disclosure, the optimized control of the flow entities may also correspond (or based on) to at least a determined order of the flow entities (minimizing a cost function), which is determined by varying at least one variation parameter such the directional parameter and/or the weight. According to an example, depending on the type of flow entity(ies), the order may be the order of well openings, the order of well drilling, the order for adding flow assistance equipment (pumps, gas lift mandrels) to flow entities, etc. A benefit of the approach relates to the reduced number of parameters involved in the determination of ranks compared to alternate method(s) while maintaining an ability to investigate a wide and diverse range of rank combination. Another benefit lies in the ability to establish a relation between performing designs and input properties (explainability).

In one or several embodiments, the rank and the at least one variation parameter may be comprised between 0 and 1. Depending on the chosen convention, the highest rank may correspond to the highest value of the rank, such 1, and the lowest rank may correspond to the smallest value of the rank, such 0. Inversely, the highest rank may correspond to the smallest value of the rank, such 0, and the lowest rank may correspond to the highest value of the rank, such 1. Such interpretations may be considered for all the present disclosure.

By the flow entity nodes directly connected to the flow entity node, it may be understood that the flow entity nodes are directly connected by a respective edge (or at least one respective edge) to the flow entity node.

A "flow entity" may refer to an equipment within a reservoir that facilitates the movement, extraction, injection, or management of fluids such as oil, gas, water, or other substances.

A "hydrocarbon reservoir" (or a geological reservoir) refers to a subsurface formation or a series of formations that contain accumulations of fluids such as oil, gas, water, hydrogen, or other substances, or may also be operated to store resources such as carbon dioxide or hydrogen.

In one or more embodiments, one or more ranks of the properties may be derived from a geological description of the subsoil comprising the hydrocarbon reservoir. Such geological description may be obtained from the memory of the computing device and/or received by the communication interface of the computing device and storing in its memory. The geological description of the subsoil may be used to build the meshed representation. The geological description may provide data about the subsurface formation, which may include at least dimensional data (dimensions of the reservoir, location, volume, etc.) as well as geological data, including rock types, petrophysical parameters such as porosity, permeability, saturation, etc. The geological description may include, or be derived from, various types of ground data acquired on the reservoir, such as:

- Seismic data (such at least one seismic image),
- Well log data,
- Core and plug data.

In one or several embodiments, the at least one variation parameter of a property may be chosen among at least:

- a directional parameter determining an impact of the evolution of a property according to a given direction on a rank

- a weight.

The directional parameter may be a coefficient of direction which may indicate whether or not a given property should be maximized or minimized in the subsequent steps of the method. The directional parameter may transcribe the relevance of a rank (or the relevance of its respective value) of a flow entity node regarding the property. For instance, it may consider that a respective value or rank for a given property may be optimal or not when it is high or low, maximum or minimum, or in the average, etc.

The weight may correspond to the importance given to a property, such as the flow entity property or the combined node edge property. The weight may be set automatically, for instance based on a database (or predetermined database or based on experimental measurements), or defined by a user such reservoir engineers and/or reservoir geologists.

In one or several embodiments, the flow entity nodes may be described by a plurality of flow entity properties and/or the flow entity edges may be described by a plurality of flow entity relationship properties, and in b/ the ranks may be determined according to a plurality of combined node-edge properties for the flow entity nodes such that each flow entity node may have a respective rank for each combined node-edge property of the plurality of combined node-edge properties.

In one or several embodiments, determining the plurality of global ranks may comprise:

- for each flow entity node, calculating a respective distance for the flow entity node from the respective rank of the flow entity node for said at least one flow entity property and from the respective rank of the flow entity node for said at least one combined node-edge property;

- determining a global rank for each flow entity node from a comparison between the respective distance calculated for the flow entity node with the distances calculated for the other flow entity nodes.

In one or several embodiments, the variation parameter may be a weight such that the properties are weighted among each other by a plurality of weights, and wherein the respective distance of each flow entity node is further calculated from the plurality of weights.

In one or several embodiments, each flow entity node may be described by a respective value of said at least one flow entity property, and each flow entity edge may be described by a respective value of said at least one flow entity relationship property, and the method may comprise in a/:

- for each flow entity node, determining the respective rank for said at least one flow entity property from a comparison between the respective value of the flow entity node for said at least one flow entity property with the respective values of the other flow entity nodes for said at least one flow entity property;

- for each flow entity edge, determining the respective rank for said at least one flow entity relationship property from a comparison between the respective value of the flow entity edge for said at least one flow entity relationship property with the respective values of the other flow entity edges for said at least one flow entity relationship property.

In one or several embodiments, one or more respective values of the properties may be derived from a geological description of the subsoil comprising the hydrocarbon reservoir, as presented previously. In one or more embodiments, one or more respective values may be obtain by experimental measurements performed in the subsoil comprising the hydrocarbon reservoir, such using seismic image(s) or by using conventional techniques suitable for measuring such respective value(s).

In one or several embodiments, wherein in b/, the respective ranks for the flow entity nodes according to said at least one combined node-edge property may be determined as follows:

- for each flow entity node N for said at least one combined node-edge property, determining a sum S for the flow entity node according to:

$$S_N^{(PN;PL)} = \left( \sum_{all\ DistantNodes\ nodes}^{all\ Node\ to-DistantNode\ edges} Rank_{DistantNodes}^{DistantNode}(PN) . Rank_{to-DistantNode\ edges}^{to-DistantNode\ edge}(PL) \right)$$

wherein $Rank_{DistantNodes}^{DistantNode}$ is a rank according to a flow entity property PN among said at least one flow entity property of a DistantNode, said DistantNode being directly connected to the flow entity node, and $Rank_{to-DistantNodes\ edges}^{to-DistantNode\ edge}$ is a rank according to an flow entity relationship property PL among said at least one flow entity relationship property of a flow entity edge, said flow entity edge being directly connected to the flow entity node,

- determining a respective rank for each flow entity node for said at least one combined node-edge property from a comparison between the respective sum calculated for the flow entity node with the sums calculated for the other flow entity nodes.

In one or several embodiments, said at least one flow entity property may be chosen among:

- a Cumulated oil production;

- a Gas in place around flow entity;

- a Lorenz heterogeneity coefficient computed along a drain interval;

- a Gas oil ratio;

- a Bottom Hole Flowing Pressure;

- A Priority computed from any pre-existing method;

In one or several embodiments, said at least one flow entity relationship property may be chosen among:

- an Euclidian distance;

- a Time of flight;

- an Allocation factor in the meaning of Waterflood optimization;

- a Time to breakthrough or Time to given water cut level

- an Interference profile;

- a Capacity or a Resistance resulting from a CRM modelling approach.

In one or several embodiments, the optimization may take into account at least one order constraint chosen among:

- imposing ordering constraint between specific flow entities;

- imposing ordering constraint between specific groups of flow entities.

In one or several embodiments, the optimized control of the flow entities may further be determined from at least a list of flow entity priorities determined by using the optimization of the cost function, the flow entity priorities being obtained by transforming a determined order of the flow entities factoring at least one application constraint at entity level for each entity.

Thus, advantageously, an optimized control of the flow entities (or of the repartition of flow entities) based on a list of flow entity priorities may be simply determined by transforming a determined order of flow entities in a series of flow priorities. In the context of the present disclosure, the optimized control of the flow entities may also correspond (or based on) to at least a list of flow entity priorities, also called allocation factors, which is determined by varying at least one variation parameter such the directional parameter and/or the weight and/or alpha and/or beta. According to an example, depending on the type of flow entity, well priorities can control the way flow for a considered flow quantity, constrained for a group of flow entities, is distributed across the entities constituting such group. Another benefit is that the flow priorities depend solely on the order of flow entities making the problem more suited to optimization process and more explainable.

In one or several embodiments, the determined order of the flow entities may be transformed into the list of flow entity priorities based on a beta law cumulative distribution function and based on the at least one application constraint at flow entity level of each flow entity, the beta law cumulative distribution function being dependent on parameters alpha and beta as variation parameters.

In one or several embodiments, the optimization may take into account at least one priority constraint chosen among:

- priority value of flow entity must be lower or higher than a predetermined value;

- priority value of a first flow entity must be lower or higher than priority value of a second flow entity.

In one or several embodiments, at least one application constraint may be chosen among:

- rate constraint pertaining to a given fluid stream;

- pressure or temperature constraint pertaining to a given point in flow system.

In one or several embodiments, the optimized control of the flow entities is determined from an order of the flow entities and a list of flow entity priorities which are determined using the optimization of the cost function with at least a first variation parameter and at least a second variation parameter as optimization variables, the at least first variation parameter is chosen among a directional parameter and a weight, and the at least second variation parameter is chosen among an alpha parameter and a beta parameter.

In one or several embodiments, wherein the list of flow entity priorities may be determined by transformation as follows:

- computing unconstrained cumulated priorities using the beta law cumulative distribution function and the global ranks of the determined order of the flow entities;
- computing unconstrained individual priorities for each flow entity by differentiating two successive unconstrained cumulated priorities;
- computing a flow target for each flow entity and each application constraint of the at least one application constraint by multiplying the application constraint at the group level by the unconstrained individual priorities computed;
- computing maximum individual constrained priority per flow entity as a proportion between the flow target of the flow entity and the flow target of the application constraint whenever the application constraint is exceeded;
- determining the list of flow entity priorities by summing the individual constrained priorities and redistributing recursively the difference between individual constrained priorities and unconstrained individual priorities over individual unconstrained flow entities according to their individual unconstrained priorities until all flow entities are constrained or a redistribution is achieved without an entity reaching a constraint.

By unconstrainted/constrained, it may be understood unconstrained/constrained regarding the application constraint.

In one or several embodiments, said at least one variation parameter may be applied to the ranks of the properties.

In one or several embodiments, a normalization of the ranks according to a property may be performed taking into account said at least one variation parameter.

In one or several embodiments, the optimization of the cost function may be a maximization or a minimization of the cost function.

In one or several embodiments, the cost function may be chosen among a Cumulated production or injection, a Discounted Net present Value or a Return on Investment.

In one or several embodiments, a flow entity may be at least one flow entity chosen among:

- a producer well, or a group of producer wells;

- an injector well or a group of injector wells;

- a drain production interval, or a group of drain production interval;

- a drain injection interval or a group drain injection interval.

In another aspect of the present disclosure, it is proposed a computer program product comprising instructions which, when the program is executed by a computer, cause the computer to carry out the method of the present disclosure.

In another aspect of the present disclosure, it is proposed a computer-readable non-transient recording medium on which a software is registered to implement the present disclosure as defined here when the software is executed by a processor.

In another aspect of the present disclosure, it is proposed a computing device for determining an optimized control of flow entities of a hydrocarbon reservoir, the computing device comprising a memory and comprising:

a/ a circuit for obtaining and for storing in the memory a meshed representation of flow entities, said representation comprising nodes and edges connecting the nodes, each flow entity being described by a node called flow entity node and each link between the flow entities being described by an edge called flow entity edge, the flow entity nodes being described by at least one property called flow entity property and the flow entity edges being described by at least one property called flow entity relationship property,

the flow entity nodes being ordered according to said at least one flow entity property such that each flow entity node has a respective rank according to said at least one flow entity property,

and the flow entity edges being ordered according to said at least one flow entity relationship property such that each flow entity edge has a respective rank according to said at least one flow entity relationship property,

b/ a circuit for determining at any simulated time an order of the flow entity nodes according to at least one property called combined node-edge property, said combined node-edge property being derived from a flow entity property among said at least one flow entity property and a flow entity relationship property among said at least one flow entity relationship property, each rank of a flow entity node according to said at least one combined node-edge property being determined from:

• the respective ranks according to a flow entity property among said at least one flow entity property of the flow entity nodes directly connected to the flow entity node; and

• the respective ranks according to a flow entity relationship property among said at least one flow entity relationship property of the flow entity edges directly connected to the flow entity node;

c/ a circuit for applying at least one variation parameter to at least one among the at least one flow entity property and the at least one combined node-edge property;

d/ a circuit for determining the optimized control of the flow entities from at least an order of the flow entities determined by using an optimization of a cost function, the at least one variation parameter being an optimization variable, said optimization comprising iterations of:

d1/ determining a plurality of global ranks for the flow entity nodes, each global rank of a flow entity node being determined from the respective rank of the flow entity node for said at least one flow entity property and from the respective rank of the flow entity node for said at least one combined node-edge property;

d2/ determining an order of the flow entities based on said global ranks;

d3/ evaluating the cost function based on the determined order of the flow entities.

## Brief Description of Drawings

Other features, details and advantages will be shown in the following detailed description and on the figures, on which:

**Fig. 1**

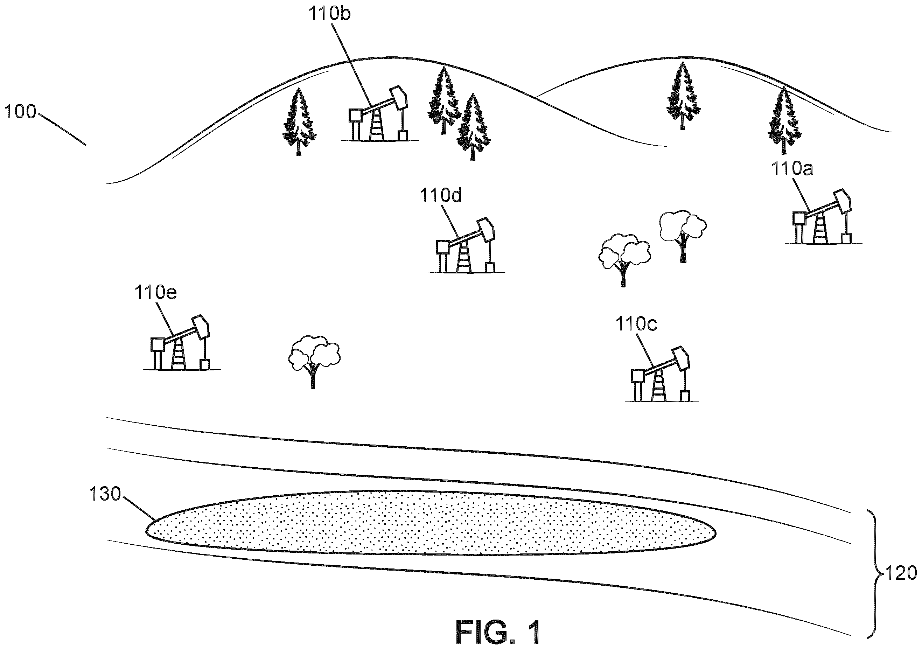

[Fig. 1] illustrates a schematic view of an exploitation of a hydrocarbon reservoir in an area.

**Fig. 2**

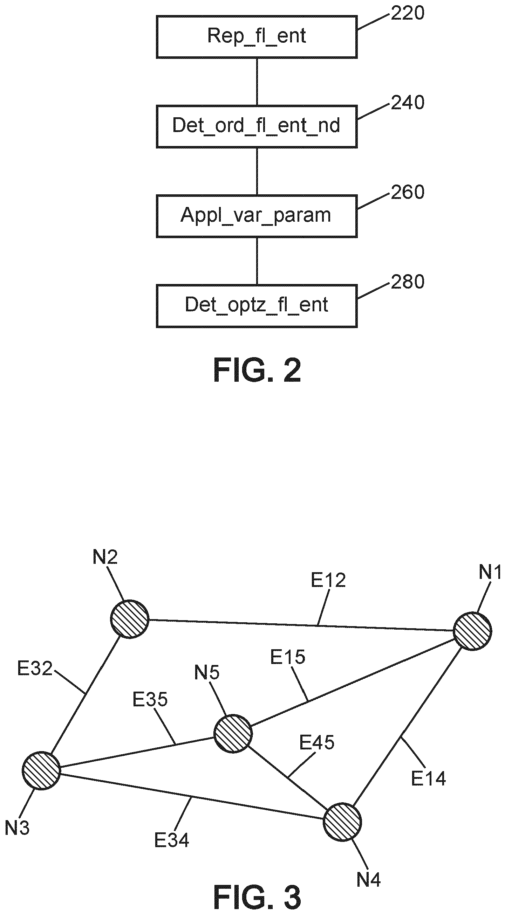

[Fig. 2] illustrates a flowchart of the method according to the present disclosure.

**Fig. 3**
[Fig. 3] illustrates an example of mesh representation of flow entities.

**Fig. 4**

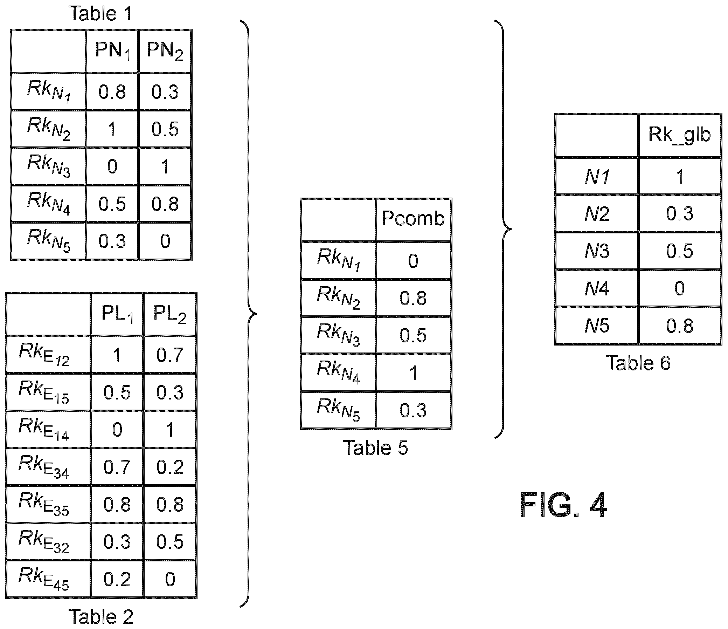

[Fig. 4] provides examples of orders of ranks according to the present disclosure.

**Fig. 5**

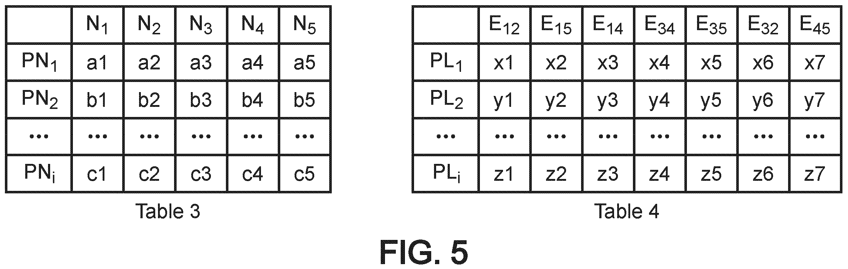

[Fig. 5] provides examples of respective values according to the present disclosure.

**Fig. 6**

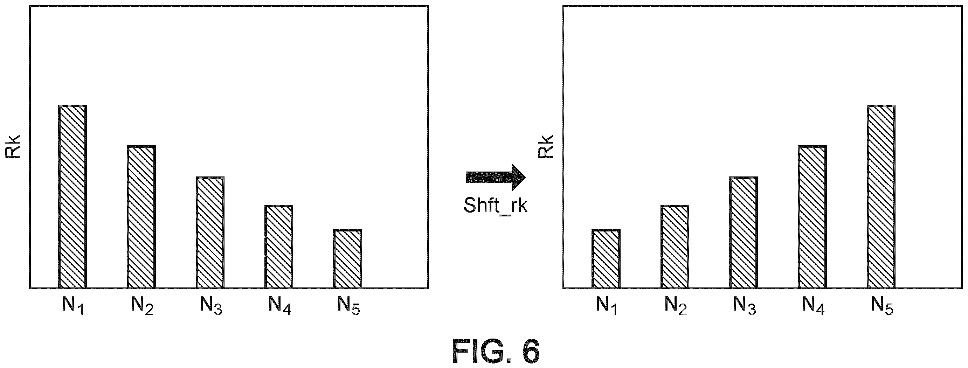

[Fig. 6] illustrates an example of effect on the ranks when applying a directional parameter through a trigonometric function.

**Fig. 7**

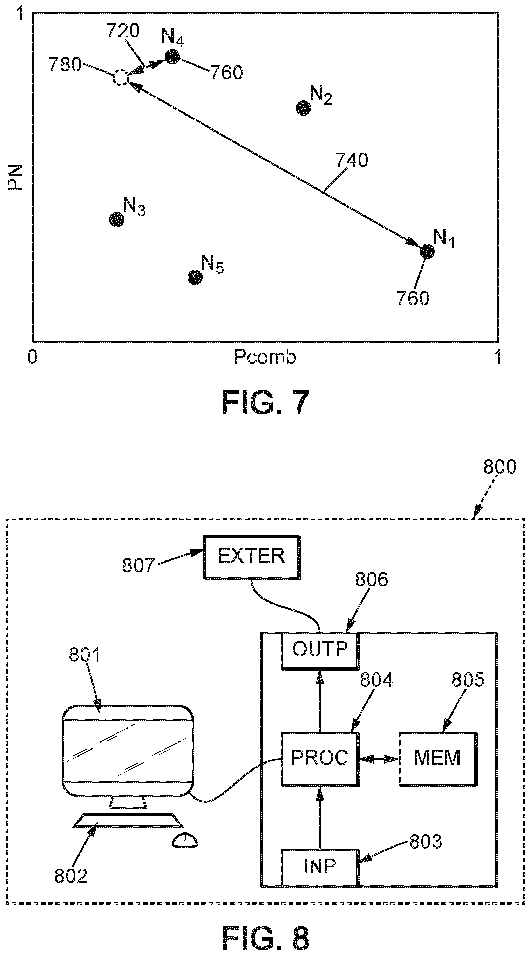

[Fig. 7] illustrates an example of a hypercube in two dimensions.

**Fig. 8**
[Fig. 8] illustrates a computing device configured to implement the method according to the present disclosure.

## Description of Embodiments

Figure 1 illustrates a schematic view of an exploitation of a hydrocarbon reservoir in an area.
The area (or zone) 100 may be an area comprising a subsoil 120 having stratigraphic layers which may formed a hydrocarbon reservoir 130 (or geological reservoir), such gas or oil for instance, and in which an exploitation is installed or will be installed or will be modified.
This hydrocarbon exploitation may have one or more flow entities 110a, 110b, 110c, 110d, 110e (or set of flow entities) to exploit the hydrocarbon reservoir 130 or in the view to exploit the hydrocarbon reservoir 130.
A "flow entity" may refer to an equipment within a reservoir that facilitates the movement, extraction, injection, or management of fluids such as oil, gas, water, or other substances.
In one or more embodiments, the flow entity may be at least one flow entity chosen among:

- a producer well or a group of producer wells;

- an injector well or a group of injector wells;

- a drain production interval or a group of drain production interval;

- a drain injection interval or a group drain injection interval.

A "hydrocarbon reservoir" (or a geological reservoir) may refer to a subsurface formation or a series of formations that contain accumulations of fluids such as oil, gas, water, hydrogen, or other substances, or may also be operated to store resources such as carbon dioxide or hydrogen, for instance in the context of CCUS (Carbon Capture, Utilization and Storage) and/or Geothermal (with previous presented flow entities or other types of flow entity). In the context of the present disclosure, the hydrocarbon reservoir may correspond to a real, existing reservoir for which ground data describing at least some geological and/or geometrical properties is available or can be acquired. The ground data can notably include, or be derived from, campaigns of seismic reflections, in-situ observations of geologists, satellite or aerial images, or wellbore data, including well logs, cores and plugs.

In the context of figure 1, the flow entities (or set of flow entities) may be wells (or a group of wells). However, alternatively, the flow entities 110a, 110b, 110c, 110d, 110e may also be a set comprising one or more wells or groups of wells, and/or one or more injection wells or groups of injection wells, and/or one or more drain production intervals, etc.

In addition, in the context of the present disclosure, the flow entities can be a group of groups of flow entities.

By "producer well", it may be understood a well for which a desired fluid, such oil or gas for instance, is produced. Hence, producer wells aim at the extraction of the desired fluid which may be carried out by a drain production interval of the well producer.

By "injector well", it may be understood a well for which a fluid, such water for instance, is injected rather than produced. Injector wells, performed at a drain injection interval of the well, aim at maintaining reservoir pressure and substituting one fluid by another in the reservoir thus enhancing the production of the desired fluid at the producer wells.

Thus, it may be understood that the flow entities may be connected between them, but not necessary, and which may be interpreted by one or more links. For instance, a link between two flow entities may be for instance defined, among others, by a time of flight between these two flow entities. A flow entity may be connected to one or more flows entities.

Figure 2 illustrates a flowchart of the method according to the present disclosure.

The method may be implemented by a computing device, such a computer or a computing server, comprising a memory and processor.

The method may consist of obtaining 220 a meshed representation of the flow entities (or a set of flow entities) as illustrated at figure 3.

The meshed representation may be for instance received by the communication interface of the computing device and/or obtained from the memory of the computing device.

According to one or more embodiments, the meshed representation may be built on a geological description of the subsoil comprising the hydrocarbon reservoir. Such geological description may be obtained from the memory of the computing device and/or received by the communication interface of the computing device and storing in its memory. The geological description may provide data about the subsurface formation, which may include at least dimensional data (dimensions of the reservoir, location, volume, etc.) as well as geological data, including rock types, petrophysical parameters such as porosity, permeability, saturation, etc. The geological description may include, or be derived from, various types of ground data acquired on the reservoir, such as:

- Seismic data,
- Well log data,
- Core and plug data.

Geological maps and cross sections, identifying geological features such as faults and fractures as well as stratigraphy information.

In one or more embodiments, the geological description of the subsoil comprising the hydrocarbon reservoir may be a three-dimensional model elaborated from ground data, and populated with the above-mentioned petrophysical parameters. The geological description may also comprise data obtained from fluid flow simulations implemented in such a model.

In one or more embodiment, and optionally, the method may comprise, prior to obtain the meshed representation, a step for building the meshed representation representing the reservoir's flow entities and their relationships based on the geological description, the meshed representation serving as a model for the method of the present disclosure.

Such meshed representation may comprise nodes N and edges E connecting the nodes. Each flow entity may be described by a node called flow entity node and each link between the flow entities may be described by an edge called flow entity edge E.

Thus, for instance, the flow entity 110a may be described by the node $N_1$, the flow entity 110e may be described by the node $N_3$, etc. Likewise, the link between the flow entities 110a and 110c, i.e. Nodes $N_1$ and $N_4$, may be described by the flow entity edge $E_{14}$, and the link between the flow entities 110a and 110b, i.e. Nodes $N_1$ and $N_2$, may be described by the flow entity edge $E_{12}$.

Each flow entity node may represent a potential or existing flow entity within/around the hydrocarbon reservoir (or reservoir).

According to one or more example, each flow entity node may be assigned geographic coordinates (not represented) along at least two axes X and Y contained in a horizontal plane, and optionally along a third axis, orthogonal to X and Y, that specify the location of the flow entity corresponding to the flow entity node within/around the hydrocarbon reservoir.

Furthermore, the flow entity nodes may be described by at least one property called flow entity property, so that the flow entity nodes being ordered according to the at least one flow entity property, and such that each flow entity node has a respective rank according to said at least one flow entity property.

Table 1 of figure 4 illustrates such as ordering of the flow entity nodes according to the at least one flow entity property. According to one or more embodiments, the rank may be comprised between 0 and 1. Of course, other notation(s) of the ranks may be possible, such comprised between 0 and 10, etc.

Thus, in reference table 1 of figure 4, according to the flow entity property $PN_1$, the flow entity node $N_1$ may have the rank 0.8 among other flow entity nodes, and the flow entity node $N_5$ may have the rank 0.3 among other flow entity nodes.

Likewise, the flow entity edges may be described by at least one property called flow entity relationship property, so that the flow entity edges may be ordered according to said at least one flow entity relationship property, and such that each flow entity edge has a respective rank according to said at least one flow entity relationship property.

Table 2 of Figure 4 illustrates such as ordering of the flow entity edges according to the at least one flow entity relationship property. For instance, according to the flow entity relationship property $PL_1$, the flow entity edge $E_{14}$ may have the rank 0 among other flow entity edges, and the flow entity edge $E_{32}$ may have the rank 0.3 among other flow entity edges.

Depending on the chosen convention, the highest rank may correspond to the highest value of the rank, such 1, and the lowest rank may correspond to the smallest value of the rank, such 0. Inversely, the highest rank may correspond to the smallest value of the rank, such 0, and the lowest rank may correspond to the highest value of the rank, such 1. Such interpretations may be considered for all the present disclosure.

In one or several embodiments, one or more ranks of the properties may be derived from the geological description of the subsoil comprising the hydrocarbon reservoir.

Table 1 and table 2 may respectively be derived from tables 3 and 4 of figure 5 according to one or more examples. Indeed, in one or more embodiments, one or more respective ranks according to the properties, such the at least one flow entity property and the at least one flow entity relationship property, may be derived from one or more respective values obtained by experimental measurements performed in the subsoil 120 of the area 100, such using seismic image(s) or by using conventional techniques suitable for measuring such respective value(s).

In one or several embodiments, one or more respective values of the properties may be derived from the geological description of the subsoil comprising the hydrocarbon reservoir, as presented previously.

More specifically, in one or several embodiments, each flow entity node may be described by a respective value of said at least one flow entity property, and each flow entity edge may be described by a respective value of said at least one flow entity relationship property, and the method may comprise:

- for each flow entity node, determining the respective rank for said at least one flow entity property from a comparison between the respective value of the flow entity node for said at least one flow entity property with the respective values of the other flow entity nodes for said at least one flow entity property;

- for each flow entity edge, determining the respective rank for said at least one flow entity relationship property from a comparison between the respective value of the flow entity edge for said at least one flow entity relationship property with the respective values of the other flow entity edges for said at least one flow entity relationship property.

Thus, in reference to table 3 of figure 5, each flow entity node N may be defined by a respective value of the flow entity property $PN_1$. A respective value of a flow entity node according to a flow entity property may characterize the flow entity described by the corresponding node (or flow entity node). Thus, for instance, the flow entity nodes $N_1$ and $N_4$ may respectively have the value a1 and a4 according to the flow entity property $PN_1$. From the respective values a1 to a5, a respective rank (Rk) may be determined for each entity flow node according to the flow entity property $PN_1$.

Likewise, in reference to table 4 of figure 5, each flow entity edge E may be defined by a respective value of the flow entity relationship property $PL_1$. A respective value of a flow entity edge E according to a flow entity relationship property $PL_1$ may characterize a link described by the corresponding flow entity edge E. Thus, for instance, the flow entity edges $E_{12}$ and $E_{34}$ may respectively have the value x1 and x4 according to the flow entity relationship property $PL_1$. From the respective values x1 to x7, a respective rank may be determined for each flow entity edge according to the flow entity relationship property $PL_1$.

In one or several embodiments, the at least one flow entity property may be chosen among:

- a Cumulated oil production;

- a Gas in place around flow entity;

- a Lorenz heterogeneity coefficient computed along a drain interval;

- a Gas oil ratio;

- a Bottom Hole Flowing Pressure;

- a Priority computed from any pre-existing method (such as Waterflood optimization or Proportional Integral Derivative or else).

In one or several embodiments, the at least one flow entity relationship property may be chosen among:

- an Euclidian distance;

- a Time of flight;

- an Allocation factor;

- a Time to breakthrough or Time to given water cut level

- an Interference profile;

- a Capacity or a Resistance resulting from a CRM modelling approach.

The allocation factor and Time to breakthrough and to given water cut level as flow entity relationship property may be understood in the meaning of waterflood optimization.
The Time of fight as flow entity relationship property may be understood in the meaning of the Fast marching Method or tracer simulation.
The method may further consist of determining 240 at any simulated time an order of the flow entity nodes according to at least one property called combined node-edge property (or combined node edge property).
The combined node-edge property may be derived from a flow entity property among said at least one flow entity property and a flow entity relationship property among said at least one flow entity relationship property, each rank ($Rk$) of a flow entity node according to said at least one combined node-edge property may be determined from:

- the respective ranks according to a flow entity property among said at least one flow entity property of the flow entity nodes directly connected to the flow entity node; and

- the respective ranks according to a flow entity relationship property among said at least one flow entity relationship property of the flow entity edges directly connected to the flow entity node.

By the flow entity nodes directly connected to the flow entity node, it may be understood that the flow entity nodes are directly connected by a respective edge (or at least one respective edge) to the flow entity node.
Thus, in reference to table 1 and table 2 of figure 4, by considering (only for example purpose) only one flow entity property $PN_1$ for the flow entity nodes and only one flow entity relationship property $PL_1$ for the flow entity edges, the respective rank of the flow entity node $N_1$ according to a combined node-edge property Pcomb may be determined (or calculated) based on the respective ranks of the flow entity nodes $N_2$, $N_4$, $N_5$ according to the flow entity property $PN_1$ and based on the respective ranks of the flow entity edges $E_{12}$, $E_{14}$, $E_{15}$ according to the flow entity relationship property $PL_1$, and which are directly connected to the flow entity node $N_1$.
Table 5 of figure 4 illustrates ranks ($Rk$) of the flow entity nodes according to the combined node-edge property Pcomb. Note that Table 5 is only for purpose of illustration, and does not result of calculation from tables 1 and 2.
In one or more embodiments, the respective ranks for the flow entity nodes according to said at least one combined node-edge property may be determined as follows:

- for each flow entity node N for said at least one combined node edge property, determining a sum S for the flow entity node according to:

$$S_N^{(PN;PL)} = \left( \sum_{\substack{all\ DistantNodes\ nodes}}^{all\ Node\ to-DistantNode\ edges} Rank_{DistantNodes}^{DistantNode}(PN) . Rank_{to-DistantNode\ edges}^{to-DistantNode\ edge}(PL) \right)$$

wherein $Rank_{DistantNodes}^{DistantNode}$ is a rank according to a flow entity property PN among said at least one flow entity property of a DistantNode, said DistantNode being directly connected to the flow entity node, and $Rank_{to-DistantNodes\ edges}^{to-DistantNode\ edge}$ is a rank according to an flow entity relationship property PL among said at least one flow entity relationship property of a flow entity edge, said flow entity edge being directly connected to the flow entity node;

- determining a respective rank for each flow entity node for said at least one combined node-edge property from a comparison between the respective sum calculated for the flow entity node with the sums calculated for the other flow entity nodes.

In the following of the previous example, in the case of the flow entity node $N_1$, and based on the tables 1 and 2, the sum $S_{N1}^{(PN1;PL1)}$ may be expressed as follows:

$$S_{N1}^{(PN1;PL1)} = Rk_{N_2}(PN_1).Rk_{E_{12}}(PL_1) + Rk_{N_4}(PN_1).Rk_{E_{14}}(PL_1) + Rk_{N_5}(PN_1).Rk_{E_{15}}(PL_1)$$
$$= (1).(1) + (0.5).(0) + (0.3).(0.5) = 1.15$$

By comparing the calculated sums of flow entity nodes N (or by ordering between them the calculated sums), a respective rank may be determined for each flow entity node according to the at least one combined node-edge property Pcomb, as illustrated at table 5 of figure 4.

The method may further consist of applying 260 at least one variation parameter to at least one among the at least one flow entity property and the at least one combined node-edge property.

In one or more embodiments, the at least one variation parameter may be applied to the ranks of the properties. Thus, for instance, the at least one variation parameter may be applied on the ranks of a flow entity property and/or the ranks of a combined node-edge property.

For instance, the variation parameter $V_1$ may be applied to the flow entity property $PN_1$, then the variation parameter may be applied to the ranks $Rk_{N_1}$ to $Rk_{N_5}$ (of the flow entity nodes $N_1$ to $N_5$).

In one or several embodiments, after applying one or several variation parameters, a normalization of the ranks may be performed, so that the ranks being comprised between a predetermined range, such for instance between 0 and 1.

According to one or more examples, the variation parameter of a property may be a directional parameter determining an impact of the evolution of a property according to a given direction on a rank of a flow entity node. More specifically, the directional parameter may be a coefficient of direction which may indicate whether or not a given property should be maximized or minimized in the subsequent steps of the method. The directional parameter may transcribe the relevance of a rank (or its respective value) of a flow entity node regarding the property. For instance, it may consider that a respective value or rank for a given property may be optimal or not when it is high or low, maximum or minimum, or in the average, etc., and for another given property, it may be different.

In one or several embodiments, the directional parameter may be applied on the ranks through a function, such a trigonometric function for instance. According to an example, the trigonometric function may be a cosine or sinus function. The function may depend on the directional parameter which may be set automatically, for instance based on a database, or defined by a user such reservoir engineers and/or reservoir geologists.

Figure 6 illustrates an example of effect on the ranks when applying a directional parameter through a trigonometric function. The ranks of figure 6 are for illustration purpose of the directional parameter and are not calculated from the previous presented tables. Thus, such directional parameter allows to move the order of the ranks for a given property. In the case of figure 6, a sinus function is used with a directional parameter equal to 0.5, allowing to inverse (shft_rk) the order of the ranks (Rk) of the flow entity nodes for a given property.

The method may then consist of determining 280 the optimized control of the flow entities from at least an order of the flow entities determined by using an optimization of a cost function, the at least one variation parameter being an optimization variable, said optimization comprising iterations of:

- determining a plurality of global ranks for the flow entity nodes, each global rank of a flow entity node being determined from the respective rank of the flow entity node for said at least one flow entity property and from the respective rank of the flow entity node for said at least one combined node-edge property;

- determining an order of the flow entities based on said global ranks,

- evaluating the cost function based on the determined order of the flow entities.

Thus, in reference to figure 4, by considering (only for example purpose) only one flow entity property $PN_1$ and only one combined node-edge property Pcomb for the flow entities nodes, the global rank of the flow entity node $N_1$ (relative to the flow entity 110a) may be determined based on the rank of the flow entity node $N_1$ according to the flow entity property $PN_1$ and the rank of the flow entity node $N_1$ according to the combined node-edge property Pcomb.

Table 6 of figure 4 illustrates an order of global ranks (Rk_glb) obtained from table 5 and table 1, and which forms a determined order of flow entities. Note that Table 6 is for only purpose of illustration, and does not result of calculation from tables 1 and 5.

Once all the global ranks of the flow entity nodes are determined for an iteration, the determined order of the flow entities formed by the global ranks of the flow entity nodes (related to the flow entities) may be used to evaluate the cost function. The iterations may continue up to reach an optimization of the cost function, such as a minimization or maximization for instance, in order to determine an optimized control of the flow entities which may be based (or correspond to) on at least the order of the flow entities. An iteration may comprise at least one modification of the at least one variation parameter as optimization variable.

Thus, advantageously, an optimized control of the flow entities may be simply determined by transforming the input data into ranks, corresponding to an order of the flow entities. In the context of the present disclosure, the optimized control of the flow entities may also correspond (or based on) to at least a determined order of the flow entities (minimizing a cost function), which is determined by varying at least one variation parameter such the directional parameter and/or the weight. According to an example, depending on the type of flow entity(ies), the order may be the order of well openings, the order of well drilling, the order for adding flow assistance equipment (pumps, gas lift mandrels) to flow entities, etc. A benefit of the approach relates to the reduced number of parameters involved in the determination of ranks compared to alternate methods while maintaining an ability to investigate a wide and diverse range of rank combination. Another benefit lies in the ability to establish a relation between performing designs and input properties (explainability).

The optimized control of flow entities of a hydrocarbon reservoir may be for a hydrocarbon exploitation which is installed, or in operation, or will be installed or will be modified.

In one or several embodiments, the cost function may be chosen among a cumulated production or injection, a Discounted Net present Value or a Return on Investment.

According to one or more examples, determining the plurality of global ranks may comprise:

- for each flow entity node, calculating a respective distance for the flow entity node from the respective rank of the flow entity node for said at least one flow entity property and from the respective rank of the flow entity node for said at least one combined node-edge property;

- determining a global rank for each flow entity node from a comparison between the respective distance calculated for the flow entity node with the distances calculated for the other flow entity nodes.

According to one or more examples, the respective distance $D_N$ for a flow entity node N may be calculated by a sum of the ranks of the flow entity node.

For instance, the distance $D_{N2}$ for the flow entity node $N_2$ may be calculated according to:

$$D_{N2} = Rk_{N2}(PN_1) + Rk_{N2}(Pcomb) = 1 + 0.8 = 1.8$$

where $Rk_{N2}(PN_1)$ is the rank of the flow entity node $N_2$ according to the flow entity property $PN_1$, i.e. 1, and $Rk_{N2}(Pcomb)$ is the rank of the flow entity node $N_2$ according to the combined node-edge property Pcomb, i.e. 0.8.

The calculated distances $D_N$ of the flow entity nodes may be compared between them in the purpose to determine an order of the flow entity nodes (or the flow entities), i.e. using ranks. The highest rank may correspond to the smallest calculated distance or the longest calculated distance, depending on the chosen convention.

The previous example(s) are presented, for the purpose of simplification, with only flow entity property and only one flow entity relationship property. However, the flow entity nodes and the flow entity edges may be described by a plurality of properties. The previous embodiments and examples may be applied to the following.

Thus, in one or several embodiments, the flow entity nodes may be described by a plurality of flow entity properties and/or the flow entity edges may be described by a plurality of flow entity relationship properties, and the ranks may be determined according to a plurality of combined node-edge properties for the flow entity nodes such that each flow entity node has a respective rank for each combined node-edge property of the plurality of combined node-edge properties.

In reference to table 1 and table 2 of figure 4, according to an example, the flow entity nodes may be described by two flow entity properties $PN_1$ and $PN_2$, and the flow entity edges may be described by two flow entity relationship

properties $PL_1$ and $PL_2$. In such case, and based on previously, each flow entity node N may be described by four combined node-edge properties, so that all property combinations may be covered. With the properties $PL_1$, $PL_2$, $PN_1$, and $PN_2$, the combination may be $(PN_1;PL_1)$, $(PN_1;PL_2)$, $(PN_2;PL_1)$, and $(PN_2;PL_2)$, each combination corresponding to a combined node edge property Pcomb. The four combined node edge properties $Pcomb_1$, $Pcomb_2$, $Pcomb_3$, $Pcomb_4$ may respectively have a rank calculated from the ranks of tables 1 and 2 of figure 4. As presented previously, table 1 and table 2 may respectively be derived from tables 3 and 4 of figure 5 according to one or more examples.

Thus, based on the above and according to the previous equation, a sum may be determined for each property combination Pcomb and for each flow entity node N. The calculated sums of the flow entity nodes for a property combination, i.e. a combined node edge property, may be compared between them in order to determine the ranks of the flow entity node according to this combined node edge property Pcomb. According to an example, in the case of the flow entity node $N_1$, the calculated sums $S_{N1}^{(PN1;PL1)}$ and $S_{N1}^{(PN1;PL2)}$ for the combination $(PN_1;PL_1)$ and $(PN_1;PL_2)$, allowing to determine the combined node edge properties $Pcomb_1$ and $Pcomb_2$, may be as follows:

$$S_{N1}^{(PN1;PL1)} = Rk_{N_2}(PN_1).Rk_{E_{12}}(PL_1) + Rk_{N_4}(PN_1).Rk_{E_{14}}(PL_1) + Rk_{N_5}(PN_1).Rk_{E_{15}}(PL_1)$$

$$S_{N1}^{(PN1;PL2)} = Rk_{N_2}(PN_1).Rk_{E_{12}}(PL_2) + Rk_{N_4}(PN_1).Rk_{E_{14}}(PL_2) + Rk_{N_5}(PN_1).Rk_{E_{15}}(PL_2)$$

The combined node edge properties of a flow entity node may be taken into account for determining the calculated distance of the flow entity node. More specifically, the calculated distance for the flow entity node N may be calculated by the sum of the ranks of the flow entity node N, i.e. all the ranks of all the combined node-edge properties and all the ranks of the flow entity properties (for this flow entity node N). The calculated distance may be expressed as follows:

$$D_N = \sum_{i=1}^{n_{PN}} Rk_N(PN_i) + \sum_{j=1}^{n_{Pcomb}} Rk_N\left(Pcomb_j\right)$$

wherein $n_{PN}$ is the number of flow entity properties, $n_{Pcomb}$ is the number of combined node-edge properties, $Rk_N(PN_i)$ is the rank of the flow entity node N according to a flow entity property $PN_i$, and $Rk_N(Pcomb_j)$ is the rank of the flow entity node N according to a combined node-edge property $Pcomb_j$.

According to an example, in the case of the flow entity node $N_1$, and taking into account the flow node properties $PN_1$ and $PN_2$ as well as the combined node edge properties $Pcomb_1$, $Pcomb_2$, $Pcomb_3$, $Pcomb_4$, the distance for the flow entity node $N_1$, may be calculated according to:

$$D_{N1} = Rk_{N1}(PN_1) + Rk_{N1}(PN_2) + Rk_{N1}(Pcomb_1) + Rk_{N1}(Pcomb_2) + Rk_{N1}(Pcomb_3) + Rk_{N1}(Pcomb_4)$$

where $Rk_{N1}(PN_1)$ is the rank of the flow entity node $N_1$ according to the flow entity property PN1, $Rk_{N1}(PN_2)$ is the rank of the flow entity node $N_1$ according to the flow entity property PN2, $Rk_{N1}(Pcomb_1)$ is the rank of the flow entity node $N_1$ according to the combined node-edge property $Pcomb_1$, $Rk_{N1}(Pcomb_2)$ is the rank of the flow entity node $N_1$ according to the combined node-edge property $Pcomb_2$, $Rk_{N1}(Pcomb_3)$ is the rank of the flow entity node $N_1$ according to the combined node-edge property $Pcomb_3$, and $Rk_{N1}(Pcomb_4)$ is the rank of the flow entity node $N_1$ according to the combined node-edge property $Pcomb_4$.

In the context of the present disclosure, it may be interesting to weigh the properties when a plurality of properties is used as presented above. Thus, according to one or more embodiments, the variation parameter of property may be a weight, so that the variation parameter may be chosen from at least:

- the directional parameter determining an impact of the evolution of a property according to a given direction on a rank;
- a weight.

The weight may correspond to the importance given to a property, such as the flow entity property or the combined node edge property. The weight may be set automatically, for instance based on a database (or predetermined database), or defined by a user such reservoir engineers and/or reservoir geologists.

More specifically, the properties may be weighted among each other by a plurality of weights, and wherein the respective distance of each flow entity node may be further calculated from the plurality of weights.

In one or several embodiments, the weights may be comprised between 0 and 1, and the sum of the weights may be equal at 1.

The calculated distance $D_N$ for a flow entity node N which takes into account the weights of the properties may be calculated as follows:

$$D_N = \sum_{i=1}^{n_{PN}} (Rk_N(PN_i) - w_{PN_i})^2 + \sum_{j=1}^{n_{Pcomb}} (Rk_N(Pcomb_j) - w_{Pcomb_j})^2$$

Wherein $n_{PN}$ is the number of flow entity properties, $n_{Pcomb}$ is the number of combined node-edge properties, $Rk_N(PN_i)$ is the rank of the flow entity node N according to a flow entity property $PN_i$, $w_{PN_i}$ the weight of the flow entity property $PN_i$, $Rk_N(Pcomb_j)$ is the rank of the flow entity node N according to a combined node-edge property $Pcomb_j$, and $w_{Pcomb_j}$ the weight of the combined node-edge property $Pcomb_j$.

Thus, in the purpose of the previous example for the flow entity node $N_1$, the calculated distance for the node $N_1$ with a given plurality of weights (0.2, 0.25, 0.1, 0.15, 0.2, 0.1), with the sum of weights equal to 1, may be expressed as the following :

$$D_{N1} = (Rk_{N1}(PN_1) - 0.2)^2 + (Rk_{N1}(PN_2) - 0.25)^2 + (Rk_{N1}(Pcomb_1) - 0.1)^2 + (Rk_{N1}(Pcomb_2)$$
$$- 0.15)^2 + (Rk_{N1}(Pcomb_3) - 0.2)^2 + (Rk_{N1}(Pcomb_4) - 0.1)^2$$

According to one or more embodiments, each calculated distance may correspond to a distance in a hypercube.

In one or several embodiments, the optimization may take into account at least one order constraint chosen among:

- imposing ordering constraint between specific flow entities;
- imposing ordering constraint between specific groups of flow entities.

According to one or more examples, imposing ordering constraint between specific flow entities may be that a first flow entity must appear before a second flow entity, irrespective of ordering of other flow entities.

According to one or more examples, imposing ordering constraint between specific groups of flow entities may be that a plurality of flow entities belonging to a first group of flow entities among other groups of flow entities must appear before any flow entity belonging to a second group can appear, irrespective of ordering of other flow entities (or group of flow entities).

Figure 7 illustrates an example of a hypercube in two dimensions.

In figure 7, in the view of illustration purpose, it considered only one flow entity property PN for the flow entity nodes associated to a given weight and only one combined node-edge property Pcomb for the flow entity nodes associated to a given weight.

Each calculated distance, such 720 and 740, of a flow entity node in the hypercube may be defined by a first point 760 having as coordinates the ranks of the properties, i.e. the flow entity property(ies) and the combined node edge priority(ies), and a second point 780 having as coordinates the weights of the properties. The second point 780 may be common to all the calculated distances, and may correspond to the desired balance of the properties in the hypercube, so that the shortest calculated distance, i.e. having its first point closest to the second point of a flow entity node, may correspond to the highest (or lowest rank) rank and the longest calculated distance, i.e. having its first point farthest to the second point, of a flow entity node may correspond to the lowest (or highest) rank. Thus, in reference to figure 7, the flow entity node N4 may present the shortest distance 720, and the flow entity node N1 may present the longest distance 760.

By ordering the calculated distances, global ranks may be determined in order to determine an order of the flow entities, as presented at table 6 of figure 4.

In the context of the domain of the present disclosure, it may be also interesting to determine one or more priorities of the flow entities.

Thus, in one or several embodiments, the optimized control of the flow entities may further be determined from at least a list of flow entity priorities using the optimization of the cost function, the flow entity priorities may be obtained by transforming a determined order of the flow entities factoring at least one application constraint at entity level for each entity.

The priorities may be understood as allocation factors, and may correspond to the fraction of a flow target or rate applicable to a group of flow entities applicable to a given flow entity part of said group.

During the optimization of the cost function, from a determined order of a set of flow entities, a list of flow entity priorities may be determined and used to evaluate the cost function in the purpose to further determine the optimized control of the flow entities. The cost function may be the same that those used for evaluating a determined order of flow entities as previously presented. According to one or more examples, the cost function used for determining the priorities of the flow entities may be different (or not) from the cost function used for determining the order of flow entities.

According to one or more embodiments, properties to be considered, weights and directional parameters might be specific or not to the nature of most constraining constraint applicable to the group of flow entities within which order or priorities are to be determined or the order by which such constraint apply; the order being determined recursively by removing more constraining constraint and reapplying constraints until no constraint is applicable.

According to one or more embodiments, the determined order of the flow entities may be transformed into the list of flow entity priorities based on a beta law cumulative distribution function and based on the at least one application constraint at flow entity level of each flow entity, the beta law cumulative distribution function being dependent on parameters alpha and beta as variation parameters.

Thus, advantageously, an optimized control of the flow entities (or of the repartition of flow entities) based on a list of flow entity priorities may be simply determined by transforming a determined order of flow entities in a series of flow priorities. In the context of the present disclosure, the optimized control of the flow entities may also correspond to (or based on) at least a list of flow entity priorities, also called allocation factors, which is determined by varying at least one variation parameter such the directional parameter and/or the weight and/or alpha and/or beta. According to an example, depending on the type of flow entity, well priorities can control the way flow for a considered flow quantity, constrained for a group of flow entities, is distributed across the entities constituting such group. Another benefit is that the flow priorities depend solely on the order of flow entities making the problem more suited to optimization process and more explainable.

The optimized control of flow entities of a hydrocarbon reservoir may be for a hydrocarbon exploitation which is installed, or in operation, or will be installed or will be modified.

According to one or several embodiments, an optimized control of the flow entities may be determined from an order of the flow entities and a list of flow entity priorities which are determined using the optimization of the cost function with at least a first variation parameter and at least a second variation parameter as optimization variables.

The at least first variation parameter may be chosen among a directional parameter and a weight, and the at least second variation parameter may be chosen among an alpha parameter and a beta parameter. Thus, In the context of the present disclosure, the optimized control of the flow entities may also correspond to (or based on) at least a list of flow entity priorities and to at least a determined order of the flow entities (minimizing a cost function), which may be determined by varying at least one variation parameter such the directional parameter and/or the weight and/or alpha and/or beta.

More specifically, during the optimization of the cost function, the variation parameters such the weights, the directional parameter, alpha, and beta, may be modified in order to determine an optimized control of the flow entities from an order of the flow entities and a list of flow entity priorities which are determined using the optimization of the cost function and based on these variation parameters.

Thus, in the context of the present disclosure, an optimized control of the flow entities may correspond to (or based on) at least a determined order of the flow entities and/or to at least a list of flow entity priorities. According to an example, the optimized control of the flow entities which is determined may comprise to an order of well openings or an order of well drilling, and may also comprise well priorities for controlling the way flow for a considered flow quantity, constrained for a group of wells.

In one or several embodiments, the at least one application constraint may be chosen among:

- rate constraint pertaining to a given fluid stream;

- pressure or temperature constraint pertaining to a given point in flow system.

According to one or several examples, rate constraint pertaining to a given fluid stream may be an oil rate below a predetermined value, a gas lift rate below a predetermined rate.

According to one or more examples, pressure or temperature constraint pertaining to a given point in flow system may be bottom hole pressure higher or equal to a predetermined value.

In one or several embodiments, the list of flow entity priorities may be transformed as follows:

- computing unconstrained cumulated priorities using the beta law cumulative distribution function and the global ranks of the determined order of the flow entities;
- computing unconstrained individual priorities for each flow entity by differentiating two successive unconstrained cumulated priorities;
- computing a flow target for each flow entity and each application constraint of the at least one application constraint by multiplying the application constraint at the group level by the unconstrained individual priorities computed;
- computing maximum individual constrained priority per flow entity as a proportion between the flow target of the flow entity and the flow target of the application constraint whenever the application constraint is exceeded;
- determining the list of flow entity priorities by summing the individual constrained priorities and redistributing recursively the difference between individual constrained priorities and unconstrained individual priorities over individual unconstrained flow entities according to their individual unconstrained priorities until all flow entities are constrained or a redistribution is achieved without an entity reaching a constraint.

By unconstrainted/constrained, it may be understood unconstrained/constrained regarding the application constraint.

In one or several embodiments, the optimization may take into account at least one priority constraint chosen among:

- priority value of flow entity must be lower or higher than a predetermined value;
- priority value of a first flow entity must be lower or higher than priority value of a second flow entity.

Figure 8 is a possible embodiment for a computing device that enables the present disclosure.

In this embodiment, the computing device 800 may comprise a circuit 804 and a memory 805 coupled to the circuit 804, and configured to store program instructions loadable into the circuit and adapted to cause circuit 804 to carry out the steps of the present disclosure when the program instructions are run by the circuit 804.

Memory 805 may also store data and useful information for carrying out the steps of the present disclosure as described above. In one or several examples, the memory may comprise a meshed representation of the flow entities, and/or a geological description of the hydrocarbon reservoir for building the meshed representation, and/or one or more variations parameters, and/or one or more respective values, and/or at least one application constraint, and/or at least one priority constraint, and/or at least one order constraint.

The memory may include volatile memory elements (e.g., random access memory (RAM)) and/or non-volatile memory elements (e.g., read-only memory (ROM), flash memory, hard drive, etc.). The memory may store various program modules and data, including an operating system, application programs, and the method's instructions.

The circuit 804 may be for instance:

- a processor or a processing unit adapted to interpret instructions in a computer language, the processor or the processing unit may comprise, may be associated with or be attached to a memory comprising the instructions, or

- the association of a processor / processing unit and a memory, the processor or the processing unit adapted to interpret instructions in a computer language, the memory comprising said instructions, or

- an electronic card wherein the steps of the disclosure are described within silicon, or

- a programmable electronic chip such as a FPGA chip (for « Field-Programmable Gate Array »), or

- graphics processing units (GPUs), or

- application-specific integrated circuits (ASICs).

The processor may be a single-core or multi-core processor, with each core capable of executing instructions independently. In a multi-core processor, the cores may work in parallel to perform the method's steps more efficiently.

The computing device 800 may be a computer comprising the circuit and the memory.

This computing device 800 may comprise an input interface 803 for the reception of at least one input parameter (such a geological description of the hydrocarbon reservoir for building the meshed representation, and/or a meshed representation of the flow entities, and/or one or more variations parameters, and/or one or more respective values, and/or at least one application constraint, and/or at least one priority constraint, and/or at least one order constraint, etc.) used for the above method according to the disclosure and an output interface 806 for providing at least one output parameter such those according to the present disclosure, such output parameter(s) may be provided to an external device 807 (or external computing device). For instance, the output parameters may be an order of flow entities and/or priorities of flow entities and/or an optimized control of the flow entities based on these order and priorities.

The computing device may also include a communication interface (not represented) for communicating with other devices or systems, such as a network interface card (NIC) for connecting to a local area network (LAN), wide area network (WAN), or the Internet. For instance, the communication interface may be used to receive at the input parameter(s) and/or sent output parameter(s).

To ease the interaction with the computing device such a computer, a screen 801 and a keyboard 802 may be provided and connected to the circuit 804.

In some embodiments, the computing device may be a server, a desktop computer, a laptop computer, a tablet, a smartphone, or any other suitable computing device capable of executing the method's instructions.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the disclosure.

**Claims**

1. A computer-implemented method for determining an optimized control of flow entities of a hydrocarbon reservoir, the method comprising:

   a/ obtaining (220) a meshed representation of flow entities, said representation comprising nodes and edges connecting the nodes, each flow entity being described by a node called flow entity node and each link between the flow entities being described by an edge called flow entity edge, the flow entity nodes being described by at least one property called flow entity property and the flow entity edges being described by at least one property called flow entity relationship property,

   > the flow entity nodes being ordered according to said at least one flow entity property such that each flow entity node has a respective rank according to said at least one flow entity property,
   > and the flow entity edges being ordered according to said at least one flow entity relationship property such that each flow entity edge has a respective rank according to said at least one flow entity relationship property,
   > b/ determining (240) at any simulated time an order of the flow entity nodes according to at least one property called combined node-edge property, said combined node-edge property being derived from a flow entity property among said at least one flow entity property and a flow entity relationship property among said at least one flow entity relationship property, each rank of a flow entity node according to said at least one combined node-edge property being determined from:

   >> • the respective ranks according to a flow entity property among said at least one flow entity property of the flow entity nodes directly connected to the flow entity node; and
   >> • the respective ranks according to a flow entity relationship property among said at least one flow entity relationship property of the flow entity edges directly connected to the flow entity node;

   c/ applying (260) at least one variation parameter to at least one among the at least one flow entity property and the at least one combined node-edge property;
   d/ determining (280) the optimized control of the flow entities from at least an order of the flow entities determined by using an optimization of a cost function, the at least one variation parameter being an optimization variable, said optimization comprising iterations of:

   > d1/ determining a plurality of global ranks for the flow entity nodes, each global rank of a flow entity node being determined from the respective rank of the flow entity node for said at least one flow entity property and from the respective rank of the flow entity node for said at least one combined node-edge property;
   > d2/ determining an order of the flow entities based on said global ranks,
   > d3/ evaluating the cost function based on the determined order of the flow entities.

2. Method according to any one of the preceding claims, wherein the at least one variation parameter of a property is chosen among at least:

   > • a directional parameter determining an impact of the evolution of a property according to a given direction on a rank;
   > • a weight.

3. Method according to any one of the preceding claims, wherein the flow entity nodes are described by a plurality of flow entity properties and/or the flow entity edges are described by a plurality of flow entity relationship properties, and in b/ the ranks are determined according to a plurality of combined node-edge properties for the flow entity nodes such that each flow entity node has a respective rank for each combined node-edge property of the plurality of combined node-edge properties.

4. Method according to any one of the preceding claims, wherein determining the plurality of global ranks comprises:

   • for each flow entity node, calculating a respective distance for the flow entity node from the respective rank of the flow entity node for said at least one flow entity property and from the respective rank of the flow entity node for said at least one combined node-edge property;
   • determining a global rank for each flow entity node from a comparison between the respective distance calculated for the flow entity node with the distances calculated for the other flow entity nodes.

5. Method according to the preceding claim, wherein the variation parameter is a weight such that the properties are weighted among each other by a plurality of weights, and wherein the respective distance of each flow entity node is further calculated from the plurality of weights.

6. Method according to any one of the preceding claims, wherein each flow entity node is described by a respective value of said at least one flow entity property, and each flow entity edge is described by a respective value of said at least one flow entity relationship property, and the method comprises in a/:

   • for each flow entity node, determining the respective rank for said at least one flow entity property from a comparison between the respective value of the flow entity node for said at least one flow entity property with the respective values of the other flow entity nodes for said at least one flow entity property;
   • for each flow entity edge, determining the respective rank for said at least one flow entity relationship property from a comparison between the respective value of the flow entity edge for said at least one flow entity relationship property with the respective values of the other flow entity edges for said at least one flow entity relationship property.

7. Method according to any one of the preceding claims, wherein in b/, the respective ranks for the flow entity nodes according to said at least one combined node-edge property are determined as follows:

   - for each flow entity node N for said at least one combined node-edge property, determining a sum S for the flow entity node according to:

$$S_N^{(PN;PL)} = \left( \sum_{all\ DistantNodes\ nodes}^{all\ Node\ to-DistantNode\ edges} Rank_{DistantNodes}^{DistantNode}(PN) . Rank_{to-DistantNode\ edges}^{to-DistantNode\ edge}(PL) \right)$$

   wherein $Rank_{DistantNodes}^{DistantNode}$ is a rank according to a flow entity property PN among said at least one flow entity property of a DistantNode, said DistantNode being directly connected to the flow entity node, and $Rank_{to-DistantNodes\ edges}^{to-DistantNode\ edge}$ is a rank according to an flow entity relationship property PL among said at least one flow entity relationship property of an flow entity edge, said flow entity edge being directly connected to the flow entity node,

   - determining a respective rank for each flow entity node for said at least one combined node-edge property from a comparison between the respective sum calculated for the flow entity node with the sums calculated for the other flow entity nodes.

8. Method according to any one of the preceding claims, wherein said at least one flow entity property is chosen among:

   • a Cumulated oil production;
   • a Gas in place around flow entity;
   • a Lorenz heterogeneity coefficient computed along a drain interval;
   • a Gas oil ratio;
   • a Bottom Hole Flowing Pressure;
   • A Priority computed from any pre-existing method;

9. Method according to any one of the preceding claims, wherein said at least one flow entity relationship property is chosen among:

- an Euclidian distance;
- a Time of flight;
- an Allocation factor in the meaning of Waterflood optimization;
- a Time to breakthrough or Time to given water cut level
- an Interference profile;
- a Capacity or a Resistance resulting from a CRM modelling approach.

10. Method according to any one of the preceding claims, wherein the optimization takes into account at least one order constraint chosen among:

   - imposing ordering constraint between specific flow entities;
   - imposing ordering constraint between specific groups of flow entities.

11. Method according to any one of the preceding claims, wherein the optimized control of the flow entities is further determined from at least a list of flow entity priorities determined by using the optimization of the cost function, the flow entity priorities being obtained by transforming a determined order of the flow entities factoring at least one application constraint at entity level for each entity.

12. Method according to the previous claim, wherein the determined order of the flow entities is transformed into the list of flow entity priorities based on a beta law cumulative distribution function and based on the at least one application constraint at flow entity level of each flow entity, the beta law cumulative distribution function being dependent on parameters alpha and beta as variation parameters.

13. Method according to any one of the preceding claims 11-12, wherein the optimization takes into account at least one priority constraint chosen among:

   - priority value of flow entity must be lower or higher than a predetermined value;
   - priority value of a first flow entity must be lower or higher than priority value of a second flow entity.

14. Method according to any one of the previous claims 11-13, wherein at least one application constraint is chosen among:

   - rate constraint pertaining to a given fluid stream;
   - pressure or temperature constraint pertaining to a given point in flow system.

15. Method according to any one of the preceding claims 11-14, wherein the optimized control of the flow entities is determined from an order of the flow entities and a list of flow entity priorities which are determined using the optimization of the cost function with at least a first variation parameter and at least a second variation parameter as optimization variables, the at least first variation parameter is chosen among a directional parameter and a weight, and the at least second variation parameter is chosen among an alpha parameter and a beta parameter.

16. Method according to any one of the preceding claims 11-15, wherein the list of flow entity priorities is determined by transformation as follows:

   - computing unconstrained cumulated priorities using the beta law cumulative distribution function and the global ranks of the determined order of the flow entities;
   - computing unconstrained individual priorities for each flow entity by differentiating two successive unconstrained cumulated priorities;
   - computing a flow target for each flow entity and each application constraint of the at least one application constraint by multiplying the application constraint at the group level by the unconstrained individual priorities computed;
   - computing maximum individual constrained priority per flow entity as a proportion between the flow target of the flow entity and the flow target of the application constraint whenever the application constraint is exceeded;
   - determining the list of flow entity priorities by summing the individual constrained priorities and redistributing recursively the difference between individual constrained priorities and unconstrained individual priorities over individual unconstrained flow entities according to their individual unconstrained priorities until all flow entities are constrained or a redistribution is achieved without an entity reaching a constraint.

17. Method according to any one of the preceding claims, wherein the cost function is chosen among a Cumulated production or injection, a Discounted Net present Value or a Return on Investment.

18. Method according to any one of the preceding claims, wherein a flow entity is at least one flow entity chosen among:

- a producer well, or a group of producer wells;
- an injector well or a group of injector wells;
- a drain production interval, or a group of drain production interval;
- a drain injection interval or a group drain injection interval.

19. A computer program product comprising instructions which, when the program is executed by a computer, cause the computer to carry out the method of any preceding claims 1 to 17.

20. A computing device for determining an optimized control of flow entities of a hydrocarbon reservoir, the computing device comprising a memory and comprising:

a/ a circuit for obtaining and for storing in the memory a meshed representation of flow entities, said representation comprising nodes and edges connecting the nodes, each flow entity being described by a node called flow entity node and each link between the flow entities being described by an edge called flow entity edge, the flow entity nodes being described by at least one property called flow entity property and the flow entity edges being described by at least one property called flow entity relationship property,

the flow entity nodes being ordered according to said at least one flow entity property such that each flow entity node has a respective rank according to said at least one flow entity property, and the flow entity edges being ordered according to said at least one flow entity relationship property such that each flow entity edge has a respective rank according to said at least one flow entity relationship property,

b/ a circuit for determining at any simulated time an order of the flow entity nodes according to at least one property called combined node-edge property, said combined node-edge property being derived from a flow entity property among said at least one flow entity property and a flow entity relationship property among said at least one flow entity relationship property, each rank of a flow entity node according to said at least one combined node-edge property being determined from:

• the respective ranks according to a flow entity property among said at least one flow entity property of the flow entity nodes directly connected to the flow entity node; and
• the respective ranks according to a flow entity relationship property among said at least one flow entity relationship property of the flow entity edges directly connected to the flow entity node;

c/ a circuit for applying at least one variation parameter to at least one among the at least one flow entity property and the at least one combined node-edge property;
d/ a circuit for determining the optimized control of the flow entities from at least an order of the flow entities determined by using an optimization of a cost function, the at least one variation parameter being an optimization variable, said optimization comprising iterations of:

d1/ determining a plurality of global ranks for the flow entity nodes, each global rank of a flow entity node being determined from the respective rank of the flow entity node for said at least one flow entity property and from the respective rank of the flow entity node for said at least one combined node-edge property;
d2/ determining an order of the flow entities based on said global ranks;
d3/ evaluating the cost function based on the determined order of the flow entities.

FIG. 1

Rep_fl_ent 220

Det_ord_fl_ent_nd 240

Appl_var_param 260

Det_optz_fl_ent 280

# FIG. 2

N2

E12

N1

E32

E15

N5

E35

E45

N3

E14

E34

N4

# FIG. 3

Table 1

|  | $PN_1$ | $PN_2$ |
|---|---|---|
| $Rk_{N_1}$ | 0.8 | 0.3 |
| $Rk_{N_2}$ | 1 | 0.5 |
| $Rk_{N_3}$ | 0 | 1 |
| $Rk_{N_4}$ | 0.5 | 0.8 |
| $Rk_{N_5}$ | 0.3 | 0 |

Table 2

|  | $PL_1$ | $PL_2$ |
|---|---|---|
| $Rk_{E_{12}}$ | 1 | 0.7 |
| $Rk_{E_{15}}$ | 0.5 | 0.3 |
| $Rk_{E_{14}}$ | 0 | 1 |
| $Rk_{E_{34}}$ | 0.7 | 0.2 |
| $Rk_{E_{35}}$ | 0.8 | 0.8 |
| $Rk_{E_{32}}$ | 0.3 | 0.5 |
| $Rk_{E_{45}}$ | 0.2 | 0 |

Table 5

|  | Pcomb |
|---|---|
| $Rk_{N_1}$ | 0 |
| $Rk_{N_2}$ | 0.8 |
| $Rk_{N_3}$ | 0.5 |
| $Rk_{N_4}$ | 1 |
| $Rk_{N_5}$ | 0.3 |

Table 6

|  | Rk_glb |
|---|---|
| $N1$ | 1 |
| $N2$ | 0.3 |
| $N3$ | 0.5 |
| $N4$ | 0 |
| $N5$ | 0.8 |

FIG. 4

|     | $N_1$ | $N_2$ | $N_3$ | $N_4$ | $N_5$ |
|-----|-----|-----|-----|-----|-----|
| $PN_1$ | a1 | a2 | a3 | a4 | a5 |
| $PN_2$ | b1 | b2 | b3 | b4 | b5 |
| ... | ... | ... | ... | ... | ... |
| $PN_i$ | c1 | c2 | c3 | c4 | c5 |

Table 3

|     | $E_{12}$ | $E_{15}$ | $E_{14}$ | $E_{34}$ | $E_{35}$ | $E_{32}$ | $E_{45}$ |
|-----|-----|-----|-----|-----|-----|-----|-----|
| $PL_1$ | x1 | x2 | x3 | x4 | x5 | x6 | x7 |
| $PL_2$ | y1 | y2 | y3 | y4 | y5 | y6 | y7 |
| ... | ... | ... | ... | ... | ... | ... | ... |
| $PL_i$ | z1 | z2 | z3 | z4 | z5 | z6 | z7 |

Table 4

# FIG. 5

EP 4 764 151 A1

EP 4 764 151 A1

**FIG. 6**

FIG. 7

FIG. 8

Europäisches
Patentamt
European
Patent Office
Office européen
des brevets

# EUROPEAN SEARCH REPORT

**Application Number**

EP 24 30 7198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/191820 A1 (HALLIBURTON ENERGY SERVICES INC [US]) 5 October 2023 (2023-10-05) * paragraphs [0010] - [0041]; figures 1-5 * ----- | 1-20 | INV. E21B43/00 E21B41/00 E21B43/12 |
| X | US 2021/238971 A1 (CRUMPTON PAUL [SA]) 5 August 2021 (2021-08-05) * paragraphs [0009] - [0084]; figures 1-11B * ----- | 1-20 | |

**TECHNICAL FIELDS SEARCHED (IPC)**

E21B

The present search report has been drawn up for all claims

| Place of search | Date of completion of the search | Examiner |
|---|---|---|
| The Hague | 1 May 2025 | Brassart, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 7198

01-05-2025

| Patent document cited in search report | Publication date | Patent family member(s) | Publication date |
|---|---|---|---|
| WO 2023191820 A1 | 05-10-2023 | US 2023313647 A1<br>WO 2023191820 A1 | 05-10-2023<br>05-10-2023 |
| US 2021238971 A1 | 05-08-2021 | EP 4100621 A1<br>US 2021238971 A1<br>WO 2021158672 A1 | 14-12-2022<br>05-08-2021<br>12-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Using Streamline-Derived Injection Efficiencies for Improved Waterflood Management. *Society of Petroleum Engineers Journal*, 2006, vol. 9 (2)
- **GÜYAGÜLER, B.** ; **BYER, T.** A New Rate-Allocation-Optimization Framework. *SPE 105200, SPE Production & Operations*, 2008, vol. 23 (4), 448-457

- **GÜYAGÜLER, B.** ; **ZAPATA, V. J.** ; **CAO, H.** ; **STAMATI, H. F.** ; **HOLMES, J. A.** Near-Well Subdomain Simulations for Accurate Inflow Performance Relationship Calculation to Improve Stability of Reservoir-Network Coupling. *SPE 141207, SPE Reservoir Evaluation & Engineering*, 2011, vol. 14 (5), 634-643